# EUROPÄISCHE PATENTSCHRIFT

(11) **EP 3 353 127 B1**
(45) Veröffentlichungstag und Bekanntmachung des Hinweises auf die Patenterteilung: **07.01.2026**
(21) Anmeldenummer: 16775579.2
(22) Anmeldetag: 22.09.2016
(51) Int. Cl.: C04B 24/16, C04B 24/24, C04B 24/26, C04B 28/02, C04B 28/04, C04B 28/08, C08F 293/00

(54) **BLOCKCOPOLYMERE ALS DISPERGIERMITTEL FÜR ALKALISCH AKTIVIERTE BINDEMITTEL**
BLOCK COPOLYMERS AS DISPERSING AGENTS FOR ALKALINE ACTIVATED BINDER
COPOLYMERES SEQUENCES COMME AGENT DISPERSANT POUR LIANT ACTIVE DE MANIERE ALCALINE

(30) Priorität: 24.09.2015 EP 15186754
(43) Veröffentlichungstag der Anmeldung: 01.08.2018
(73) Patentinhaber: Sika Technology AG, 6340 Baar (CH)
(72) Erfinder: WEIDMANN, Jürg, 8404 Winterthur (CH); FRUNZ, Lukas, 8305 Dietlikon (CH); ZIMMERMANN, Jörg, 8400 Winterthur (CH); JUILLAND, Patrick, 3005 Bern (CH)
(74) Vertreter: Sika Patent Attorneys
(86) Internationale Anmeldenummer: PCT/EP2016/072551
(87) Internationale Veröffentlichungsnummer: WO 2017/050902

(56) Entgegenhaltungen:
- EP-A1- 1 138 697
- WO-A1-2011/015780
- WO-A1-2015/144886
- FR-A1- 2 969 156
- FR-A1- 2 969 156

## Beschreibung

### Technisches Gebiet

Die Erfindung betrifft die Verwendung eines Blockcopolymers als Dispergiermittel in einer Bindemittelzusammensetzung enthaltend ein alkalisches Aktivierungsmittel. Weiter bezieht sich die Erfindung auf eine Bindemittelzusammensetzung sowie ein Verfahren zu deren Herstellung. Ein weiterer Aspekt der Erfindung betrifft einen Formkörper, erhältlich aus einer Bindemittelzusammensetzung.

### Stand der Technik

Zement verursacht durch seine Herstellung einen enormen Ausstoss an CO₂. Um diese Emissionen zu reduzieren, wird in Bindemittelzusammensetzungen zunehmend Zement teilweise durch latent hydraulische und/oder puzzolanische Zementzusatzstoffe wie z.B. Flugaschen, Schlacken oder Silicastaub ersetzt, welche als Nebenprodukte in Industrieprozessen anfallen und sich deshalb auf die CO₂-Bilanz positiv auswirken. Ein Problem, welches sich durch die Verwendung derartiger Zusatzstoffe ergibt ist, dass das Abbinden dieser Zusatzstoffe deutlich mehr Zeit beansprucht als das Abbinden von hydraulischem Zement, was sich insbesondere nachteilig auf hohe Frühfestigkeiten auswirkt. Um dieses Problem zu umgehen, können latent hydraulische und puzzolanische Zusatzstoffe durch Zugabe eines geeigneten Aktivierungsmittels aktiviert werden, beispielsweise durch alkalische Aktivierungsmittel.

Um die Verarbeitbarkeit von mineralischen Bindemittelzusammensetzungen bei möglichst geringem Wasser/Bindemittel-Verhältnis zu verbessern ist es weiterhin üblich, sogenannte Dispergiermittel als Verflüssiger einzusetzen, wodurch sowohl die Konsistenz der Bindemittelzusammensetzung während der Verarbeitung, als auch die Eigenschaften in ausgehärtetem Zustand in vorteilhafter Weise verändert werden. Als besonders effektive Dispergiermittel bekannt sind beispielsweise Kammpolymere auf Polycarboxylatbasis. Solche Kammpolymere verfügen über ein Polymerrückgrat und daran gebunden Seitenketten. Entsprechende Polymere sind z.B. in der EP 1 138 697 A1 (Sika AG) beschrieben.

Ebenfalls bekannt als Betonzusatzmittel sind Copolymermischungen wie sie z.B. in der EP 1 110 981 A2 (Kao) erwähnt sind. Die Copolymermischungen werden hergestellt, indem ethylenisch ungesättigte Monomere in einer freien radikalischen Polymerisationsreaktion umgesetzt werden, wobei das molare Verhältnis der beiden Monomere während dem Polymerisationsvorgang wenigstens einmal geändert wird. Die FR 2969156 zeigt die Verwendung von Copolymeren in welchen Monomere in Blöcken angeordnet sein können und welche mit Methallylsulfonat als Transferagenz hergestellt werden, als polymere Dispergiermittel für hydraulische Bindemittelzusammensetzungen. Die WO 2011015780 nutzt für diesen Zweck sternförmige Block-Copolymere.

Wie sich gezeigt hat, sind Kammpolymere auf Polycarboxylatbasis jedoch im Allgemeinen äusserst empfindlich gegenüber erhöhten basischen Bedingungen. Daher verlieren solche Dispergiermittel zusammen mit alkalischen Aktivierungsmitteln bereits nach kurzer Zeit ihre Wirkung.

Es besteht daher ein grosser Bedarf nach wirksamen Dispergiermitteln, welche auch in alkalisch aktivierten Bindemittelzusammensetzungen einsetzbar sind.

### Darstellung der Erfindung

Aufgabe der Erfindung ist es daher, ein verbessertes Dispergiermittel bereitzustellen, bei welchem vorstehende Nachteile überwunden werden. Das Dispergiermittel soll insbesondere in alkalisch aktivierten Bindemittelzusammensetzungen einsetzbar sein und dabei möglichst lange wirksam bleiben, eine effektive Verflüssigung und gute Verarbeitbarkeit der Zusammensetzung erlauben.

Überraschenderweise wurde gefunden, dass diese Aufgabe durch die Verwendung eines Blockcopolymers P gemäss Anspruch 1 gelöst werden kann. Das Blockcopolymer P zeichnet sich insbesondere dadurch aus, dass dieses wenigstens einen ersten Block A und wenigstens einen zweiten Block B umfasst, wobei der erste Block A eine Monomereinheit **M1** der Formel I (wie weiter hinten definiert) aufweist, und der zweite Block B eine Monomereinheit **M2** der Formel II (wie weiter hinten definiert) beinhaltet und wobei ein allenfalls vorhandener Anteil von Monomereinheiten **M2** im ersten Block A kleiner als 25 Mol-%, insbesondere kleiner gleich 10 Mol-%, ist, bezogen auf sämtliche Monomereinheiten **M1** im ersten Block A und wobei ein allenfalls vorhandener Anteil von Monomereinheiten **M1** im zweiten Block B kleiner als 25 Mol-%, insbesondere kleiner gleich 10 Mol-%, ist, bezogen auf sämtliche Monomereinheiten **M2** im zweiten Block B.

Wie sich gezeigt hat, sind die erfindungsgemäss verwendeten Blockcopolymere P gegenüber alkalischen Bedingungen, wie sie z.B. in alkalisch aktivierten Bindemittelzusammensetzungen mit latent hydraulischen und/oder puzzolanischen Bindemitteln vorherrschen, überraschend unempfindlich und erlauben somit eine, im Vergleich mit der Verwendung von bekannten Dispergiermitteln, insbesondere im Vergleich mit Kammpolymeren mit statistischer Verteilung der Monomere, sehr gute Verarbeitbarkeit und eine hohe Wasserreduktion.

Dies zeigt sich insbesondere darin, dass die Differenz der Fliessfähigkeit von angemachten kammpolymerhaltigen Bindemittelzusammensetzungen mit und ohne alkalische Aktivierungsmittel relativ gering ausfällt.

Somit bleiben die erfindungsgemässen Blockcopolymere als Dispergiermittel oder Verflüssiger selbst in alkalisch aktivierten Bindemittelzusammensetzungen über längere Zeit wirksam und ermöglichen eine gute Verarbeitbarkeit bei geringem Wasser/Zement-Verhältnis.

Die erfindungsgemässen Blockcopolymere lassen sich somit in vorteilhafter Weise speziell zur Verflüssigung, zur Reduktion des Wasserbedarfs und/oder zur Verbesserung der Verarbeitbarkeit von mineralischen Bindemittelzusammensetzungen enthaltend alkalische Aktivierungsmittel verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Blockcopolymers **P** als Dispergiermittel in einer Bindemittelzusammensetzung enthaltend mindestens ein mineralisches Bindemittel und ein alkalisches Aktivierungsmittel, wobei das Blockcopolymer **P** ein Polymer gemäss Anspruch 1 darstellt.

Im Blockcopolymer **P** können mehrere unterschiedliche Monomereinheiten **M1** der Formel I und/oder mehrere unterschiedliche Monomereinheiten **M2** der Formel II vorliegen.

Die Monomereinheiten **M1** und allfällige weitere Monomereinheiten im ersten Block **A** liegen insbesondere statistisch oder zufällig verteilt vor. Ebenso liegen die Monomereinheiten **M2** und allfällige weitere Monomereinheiten im zweiten Block **B** insbesondere statistisch oder zufällig verteilt vor.

Mit anderen Worten liegt der wenigstens eine Block **A** und/oder der wenigstens eine Block **B** bevorzugt jeweils als Teilpolymer mit zufälliger Monomerenverteilung vor.

Der wenigstens eine erste Block **A** umfasst mit Vorteil 5 - 70, insbesondere 7 - 40, bevorzugt 10 - 25 Monomereinheiten **M1** und/oder der wenigstens eine zweite Block **B** umfasst 5 - 70, insbesondere 7 - 50, bevorzugt 520 - 40 Monomereinheiten **M2.**

Gemäss einer weiteren bevorzugten Ausführungsform umfasst der erste Block **A** 25 - 35 Monomereinheiten **M1** und/oder der wenigstens eine zweite Block **B** umfasst 20 - 40 Monomereinheiten **M2.**

Ein gewichtsgemitteltes Molekulargewicht M_{w} des gesamten Blockcopolymers **P** liegt insbesondere im Bereich von 10'000 - 150'000 g/mol, vorteilhafterweise 12'000 - 80'000 g/mol, speziell 12'000 - 50'000 g/mol. Im vorliegenden Zusammenhang werden Molekulargewichte, wie das gewichtsgemittelte Molekulargewicht M_{w}, durch Gel-Permeations-Chromatographie (GPC) mit Polyethylenglycol (PEG) als Standard bestimmt. Diese Technik ist dem Fachmann an sich bekannt.

Im Besonderen ist es möglich, die Struktur der Blockcopolymere durch Kernspinresonanzspektroskopie (NMR-Spektroskopie) zu analysieren und zu bestimmen. Insbesondere durch ¹H- und ¹³C-NMR-Spektroskopie lässt sich in an sich bekannter Weise aufgrund von Nachbargruppeneffekten im Blockcopolymer und anhand von statistischen Auswertungen die Abfolge der Monomereinheiten im Blockcopolymere bestimmen.

Bevorzugt ist ein allenfalls vorhandener Anteil von Monomereinheiten **M2** im ersten Block **A** kleiner als 15 Mol-%, insbesondere kleiner als 10 Mol-%, speziell kleiner als 5 Mol-% oder kleiner als 1 Mol-%, bezogen auf sämtliche Monomereinheiten **M1** im ersten Block **A.** Zudem ist ein allenfalls vorhandener Anteil von Monomereinheiten **M1** im zweiten Block **B** mit Vorteil kleiner als 15 Mol-%, insbesondere kleiner als 10 Mol-%, speziell kleiner als 5 Mol-% oder kleiner als 1 Mol-%, bezogen auf sämtliche Monomereinheiten **M2** im zweiten Block **B.** Mit Vorteil sind beide Bedingungen zugleich erfüllt.

Speziell vorteilhaft ist beispielsweise ein allenfalls vorhandener Anteil von Monomereinheiten **M2** im ersten Block **A** kleiner als 15 Mol-% (bezogen auf sämtliche Monomereinheiten **M1** im ersten Block **A**) und ein allenfalls vorhandener Anteil von Monomereinheiten **M1** im zweiten Block **B** ist kleiner als 10 Mol-% (bezogen auf sämtliche Monomereinheiten **M2** im zweiten Block **B**).

Damit liegen die Monomereinheiten **M1** und **M2** im Wesentlichen räumlich getrennt vor, was der Dispergierwirkung des Blockcopolymers zu Gute kommt und im Hinblick auf die Verzögerungsproblematik vorteilhaft ist.

Der erste Block **A** besteht bezogen auf sämtliche Monomereinheiten im ersten Block **A** im Besonderen zu wenigstens 20 Mol-%, insbesondere wenigstens 50 Mol-%, speziell wenigstens 75 Mol-% oder wenigstens 90 Mol-%, aus Monomereinheiten **M1** der Formel I. Der zweite Block **B** besteht bezogen auf sämtliche Monomereinheiten im zweiten Block **B** vorteilhafterweise zu wenigstens 20 Mol-%, insbesondere wenigstens 50 Mol-%, speziell wenigstens 75 Mol-% oder wenigstens 90 Mol-%, aus Monomereinheiten **M2** der Formel II. Ein Molverhältnis der Monomereinheiten **M1** zu den Monomereinheiten **M2** im Blockcopolymer **P** liegt insbesondere im Bereich von 0.5-6, insbesondere 0.7 - 4, bevorzugt 0.9 - 3.8, weiter bevorzugt 1.0 - 3.7 oder 2 - 3.5. Dadurch wird eine optimale Dispergierwirkung in mineralischen Bindemittelzusammensetzungen erreicht.

Insbesondere bei einem Molverhältnis der Monomereinheiten **M1** zu den Monomereinheiten **M2** im Bereich von 1.5 -6, bevorzugt 1.8 - 5 oder 2 - 3.5, wird eine gute und zugleich besonders lang anhaltende Dispergierwirkung in mineralischen Bindemittelzusammensetzungen erreicht werden.

Für spezielle Anwendungen können aber auch andere Molverhältnisse vorteilhaft sein.

Insbesondere sind R¹ = -COOM, R² = H oder -CH₃, R³ = R⁴ = H. Damit lässt sich das Blockcopolymer auf der Basis von Acryl- oder Methacrylsäuremonomeren herstellen, was aus ökonomischer Sicht interessant ist. Zudem ergibt sich mit derartigen Blockcopolymeren **P** im vorliegenden Zusammenhang eine gute Dispergierwirkung bei geringer Verzögerung der Abbindezeit.

Ebenfalls vorteilhaft können Blockcopolymere **P** mit R¹ = -COOM, R² = H, R³ = H und R⁴ = -COOM sein. Solche Kammpolymere lassen sich auf der Basis von Maleinsäuremonomeren herstellen.

Vorteilhafterweise sind R⁵ = H oder -CH₃, R⁶ = R⁷ = H und X = -O-. Derartige Blockcopolymere **P** lassen sich z.B. ausgehend von (Meth)acrylsäureestern, Vinyl-, (Meth)allyl- oder Isoprenolethern herstellen.

Bei einer besonders vorteilhaften Ausführungsform stehen R² und R⁵ jeweils für Mischungen aus 40 - 60 Mol-% H und 40 - 60 Mol-% -CH₃.

Gemäss weiteren vorteilhaften Ausführungsform ist R¹ = -COOM, R² = H, R⁵ = -CH₃ und R³ = R⁴ = R⁶ = R⁷ = H.

Bei einer anderen vorteilhaften Ausführungsform ist R¹ = -COOM, R² = R⁵ = H oder -CH₃ und R³ = R⁴ = R⁶ = R⁷ = H.

Der Rest R⁸ in Monomereinheit **M2** besteht, bezogen auf sämtliche Reste R⁸ im Blockcopolymer **P,** insbesondere zu wenigstens 50 Mol-%, insbesondere wenigstens 75 Mol-%, bevorzugt wenigstens 95 Mol-% oder wenigstens 99 Mol-%, aus einem Polyethylenoxid. Ein Anteil an Ethylenoxideinheiten bezogen auf sämtliche Alkylenoxideinheiten im Blockcopolymer **P** beträgt insbesondere mehr als 75 Mol-%, insbesondere mehr als 90 Mol-%, bevorzugt mehr als 95 Mol-% und im Speziellen 100 Mol-%.

Insbesondere weist R⁸ im Wesentlichen keine hydrophoben Gruppen auf, insbesondere keine Alkylenoxide mit drei oder mehr Kohlenstoffatomen. Damit ist insbesondere gemeint, dass ein Anteil an Alkylenoxiden mit drei oder mehr Kohlenstoffatomen bezogen auf sämtliche Alkylenoxide weniger als 5 Mol-%, insbesondere weniger als 2 Mol-%, bevorzugt weniger als 1 Mol-% oder weniger als 0.1 Mol-% beträgt. Im Besonderen liegen keine Alkylenoxide mit drei oder mehr Kohlenstoffatomen vor oder deren Anteil beträgt 0 Mol-%.

R^{a} steht mit Vorteil für H und/oder eine Methylgruppe. Besonders vorteilhaft ist A = C₂-Alkylen und R^{a} steht für H oder eine Methylgruppe.

Insbesondere ist der Parameter n = 10 - 150, bevorzugt n = 15 - 100, besonders bevorzugt n = 17 - 70, im Speziellen n = 19 - 45 oder n = 20 - 25. Im Besonderen in den genannten Vorzugsbereichen werden dadurch ausgezeichnete Dispergierwirkungen erzielt.

Weiter kann es vorteilhaft sein, wenn das Blockcopolymer **P** wenigstens eine weitere Monomereinheit **MS** umfasst, welche sich insbesondere von den Monomereinheiten **M1** und **M2** chemisch unterscheidet. Im Besonderen können mehrere unterschiedliche weitere Monomereinheiten **MS** vorliegen. Dadurch können die Eigenschaften des Blockcopolymers **P** weiter modifiziert und beispielsweise im Hinblick auf spezielle Anwendungen angepasst werden.

Besonders vorteilhaft ist die wenigstens eine weitere Monomereinheit **MS** eine Monomereinheit der Formel III: 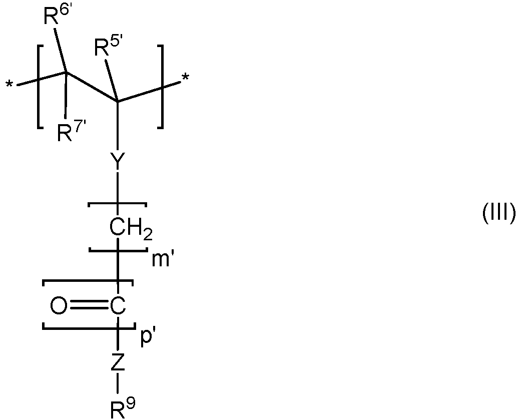 wobei
R^{5'}, R^{6'}, R^{7'}, m' und p' wie R⁵, R⁶, R⁷, m und p definiert sind;
Y, jeweils unabhängig voneinander, für eine chemische Bindung oder -O- steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

Vorteilhaft sind z.B. Monomereinheiten **MS** wobei m' = 0 ist, p' = 0 ist, Z und Y eine chemische Bindung darstellen und R⁹ für eine Alkylarylgruppe mit 6 - 10 C-Atomen steht.

Auch geeignet sind insbesondere bei Monomereinheiten **MS** bei welchen m' = 0 ist, p' = 1 ist, Y für -O- steht, Z eine chemische Bindung darstellt und R⁹ für eine Alkylgruppe mit 1 - 4 C-Atomen steht.

Weiter sind Monomereinheiten **MS** geeignet wobei m' = 0 ist, p' = 1 ist, Y für eine chemische Bindung steht, Z für -O- steht und R⁹ eine Alkylgruppe und/oder eine Hydroxyalkylgruppe mit 1 - 6 C-Atomen darstellt.

Besonders vorteilhaft besteht die wenigstens eine weitere Monomereinheit **MS** aus einpolymerisiertem Vinylacetat, Styrol und/oder Hydroxyalkyl(meth)acrylat, insbesondere Hydroxyethylacrylat.

Die wenigstens eine weitere Monomereinheit **MS** kann Bestandteil des ersten Blocks **A** und/oder des zweiten Blocks **B** sein. Insbesondere können in den verschiedenen Blöcken unterschiedliche Monomereinheiten **MS** vorliegen.

Falls im ersten Block **A** vorhanden, weist die wenigstens eine weitere Monomereinheit **MS** im ersten Block **A** mit Vorteil einen Anteil von 0.001 - 80 Mol-%, bevorzugt 20 - 75 Mol-%, speziell 30 - 70 Mol-%, bezogen auf sämtliche Monomereinheiten im ersten Block **A,** auf.

Sofern im zweiten Block **B** vorhanden weist die wenigstens eine weitere Monomereinheit **MS** im zweiten Block **B** insbesondere einen Anteil von 0.001 - 80 Mol-%, bevorzugt 20 - 75 Mol-%, speziell 30 - 70 Mol-% oder 50 - 70 Mol-%, bezogen auf sämtliche Monomereinheiten im zweiten Block **B,** auf.

Gemäss einer vorteilhaften Ausführungsform ist im ersten Block A und/oder im zweiten Block **B** die wenigstens eine weitere Monomereinheit **MS** mit einem Anteil von 20 - 75 Mol-%, speziell 30 - 70 Mol-%, bezogen auf sämtliche Monomereinheiten im jeweiligen Block, vorhanden.

Bei dem Blockcopolymer **P** handelt es sich um ein Diblockcopolymer, bestehend aus einem Block **A** und einem Block **B.**

Ein besonders vorteilhaftes Blockcopolymer **P** weist wenigstens eines oder mehrere der folgenden Merkmale auf:
(i) Block **A** weist 7-40, insbesondere 10 - 25 oder 25 - 35, Monomereinheiten **M1** auf und Block **B** weist 7 - 50, insbesondere 20 - 40, Monomereinheiten **M2** auf.
(ii) Der erste Block **A** besteht bezogen auf sämtliche Monomereinheiten im ersten Block **A** zu wenigstens 75 Mol-%, bevorzugt wenigstens 90 Mol-%, aus Monomereinheit **M1** der Formel I;
(iii) Der zweite Block **B** besteht bezogen auf sämtliche Monomereinheiten im zweiten Block **B** zu wenigstens 75 Mol-%, bevorzugt wenigstens 90 Mol-%, aus Monomereinheiten **M2** der Formel II;
(iv) Ein Molverhältnis der Monomereinheiten **M1** zu den Monomereinheiten **M2** im Blockcopolymer liegt im Bereich von 0.5 - 6, bevorzugt 0.8 - 3.5;
(v) R¹ steht für COOM;
(vi) R² und R⁵ stehen für H oder CH₃, bevorzugt CH₃;
(vii) R³ = R⁴ = R⁶ = R⁷ = H;
(viii) m = 0 und p = 1;
(ix) X = -O-
(x) A = C₂-Alkylen und n = 10 - 150, bevorzugt 15 - 50;
(xi) R^{a} = H oder -CH₃, bevorzugt -CH₃;

Speziell bevorzugt ist ein Diblockcopolymer **P,** bestehend aus den Blöcken A und B, welches zumindest sämtliche Merkmale (i) - (iv) aufweist. Weiter bevorzugt ist dabei ein Diblockcopolymer **P** welches sämtliche Merkmale (i) - (xi) aufweist. Noch weiter bevorzugt ist ein Diblockcopolymer **P** welches sämtliche Merkmale (i)-(xi) in den jeweils bevorzugten Ausführungen realisiert.

In einer speziellen Ausführungsform ist in diesen Diblockcopolymeren **P** zudem in Block **A** und **B** zusätzlich eine weitere Monomereinheit **MS** wie sie vorstehend beschrieben wurde, insbesondere eine weitere Monomereinheit **MS** der Formel III, enthalten.

Beim Blockcopolymer handelt es sich im Besonderen um ein Polymer mit im Wesentlichen linearer Struktur. Damit ist im Besonderen gemeint, dass sämtliche Monomereinheiten des Blockcopolymers in einer einzigen und/oder unverzweigten Polymerkette angeordnet sind. Im Speziellen verfügt das Blockcopolymer nicht über eine sternförmige Struktur und/oder das Blockcopolymer ist nicht Bestandteil eines verzweigten Polymers. Insbesondere ist das Blockcopolymer nicht Bestandteil eines Polymers bei welchen an einem zentralen Molekül mehrere, insbesondere drei oder mehr, in unterschiedliche Richtungen verlaufende Polymerketten angebracht sind.

Das Blockcopolymer kann in flüssiger oder fester Form vorliegen. Besonders bevorzugt liegt das Blockcopolymer als Bestandteil einer Lösung oder Dispersion vor, wobei ein Anteil des Blockcopolymers insbesondere 10 - 90 Gew.-%, bevorzugt 25 - 65 Gew.-% beträgt. Dadurch lässt sich das Blockcopolymer beispielsweise sehr gut zu Bindemittelzusammensetzungen zugeben. Wird das Blockcopolymer in Lösung, insbesondere in wässriger Lösung, hergestellt, kann zudem auf eine weitere Aufbereitung verzichtet werden.

Entsprechend einer anderen vorteilhaften Ausführungsform liegt das Blockcopolymer in festem Aggregatszustand vor, insbesondere in Form eines Pulvers, in Form von Pellets und/oder Platten. Dadurch wird insbesondere der Transport der Blockcopolymere vereinfacht. Lösungen oder Dispersionen der Blockcopolymere können z.B. durch Sprühtrocknung in den festen Aggregatszustand überführt werden.

Ein weiterer Aspekt der vorliegenden Erfindung betrifft ein Verfahren zur Herstellung eines Blockcopolymers umfassend einen Schritt a) der Polymerisation von Monomeren **m1** der Formel IV 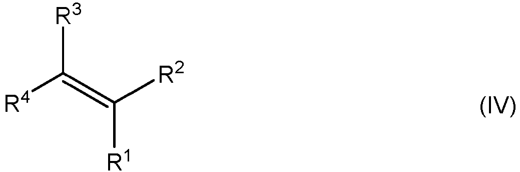 sowie einen Schritt
b) der Polymerisation von Monomeren **m2** der Formel V 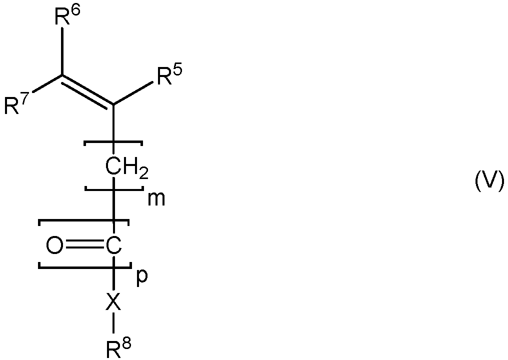 wobei R¹, R², R³, R⁴, R⁵, R⁶, R⁷, R⁸, m, p und X wie vorstehend definiert sind und wobei
bei Schritt a) ein allenfalls vorhandener Anteil an Monomer **m2** kleiner als 25 Mol-%, insbesondere kleiner gleich 10 Mol-%, bezogen auf die Monomere **m1,** ist;
und bei Schritt b) ein allenfalls vorhandener Anteil an Monomer **m1** kleiner als 25 Mol-%, insbesondere kleiner gleich 10 Mol-%, bezogen auf die Monomere **m2,** ist;
und wobei die Schritte a) und b) zeitlich nacheinander, in beliebiger Reihenfolge ausgeführt werden.

Die Polymerisation in Schritt a) wird insbesondere so lange durchgeführt, bis 75 - 95 Mol-%, bevorzugt 85 - 95 Mol.-%, insbesondere 86 - 92 Mol-%, der ursprünglich vorgelegten Monomere **m1** umgesetzt bzw. polymerisiert sind.

Insbesondere wird die Polymerisation in Schritt b) entsprechend so lange durchgeführt, bis 75 - 95 Mol-%, insbesondere 80 - 92 Mol-%, der ursprünglich vorgelegten Monomere **m2** umgesetzt bzw. polymerisiert sind.

Der Umsatz der Monomere **m1** und **m2** bzw. der Fortschritt der Polymerisation in den Schritten a) und b) kann z.B. mit Hilfe von Flüssigkeitschromatographie, insbesondere Hochleistungsflüssigkeitschromatographie (HPLC), in an sich bekannter Weise kontrolliert werden.

Wie sich gezeigt hat, ist es von Vorteil, die Monomere **m1** und **m2** in den Schritten a) und b) bis zu den vorstehend genannten Umsätzen umzusetzen. Zudem ist es vorteilhaft, die Schritte a) und b) unabhängig von der gewählten Reihenfolge unmittelbar aufeinander folgend durchzuführen. Dadurch können die Polymerisationsreaktion in den Schritten a) und b) bestmöglich aufrecht zu erhalten werden.

Das Verfahren kann z.B. durchgeführt werden, indem in Schritt a) Monomere **m1** in einem Lösungsmittel, z.B. Wasser, vorgelegt und sodann zu einem ersten Block **A** polymerisiert werden. Sobald der gewünschte Umsatz an Monomer **m1** erreicht ist (z.B. 75 - 95 Mol-%, insbesondere 80 - 92 Mol-%; siehe vorstehend), werden ohne zeitliche Verzögerung in Schritt b) Monomere **m2** zugegeben und die Polymerisation fortgesetzt. Dabei werden die Monomere **m2** insbesondere an den bereits gebildeten Block **A** angefügt, wodurch ein zweiter Block **B** gebildet wird. Die Polymerisation wird mit Vorteil wiederum so lange weitergeführt, bis der gewünschte Umsatz an Monomer **m2** (z.B. 75 - 95 Mol-%, insbesondere 80 - 92 Mol-%; siehe vorstehend) erreicht ist. Dadurch wird z.B. ein Diblockcopolymer umfassend einen ersten Block **A** und einen damit verbundenen zweiten Block **B** erhalten.

Gemäss einer weiteren vorteilhaften Ausführungsform liegt in Schritt a) und/oder in Schritt b) wenigstens ein weiteres polymerisierbares Monomer **ms** vor. Das wenigstens eine weitere polymerisierbare Monomer **ms** wird in diesem Fall insbesondere zusammen mit dem Monomer **m1** und/oder dem Monomer **m2** polymerisiert.

Das wenigstens eine weitere polymerisierbare Monomer **ms** ist, unabhängig davon wie dieses in das Blockcopolymer integriert wird, insbesondere ein Monomer der Formel VI 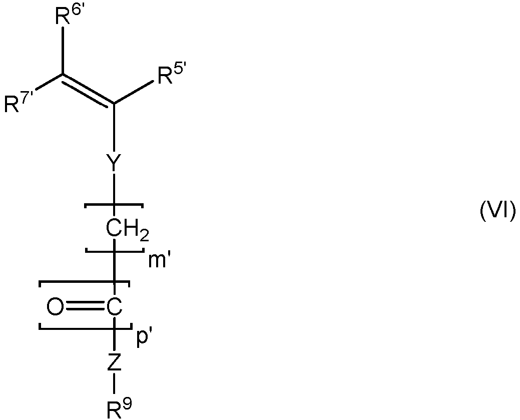 wobei
R^{5'}, R^{6'}, R^{7'}, R⁹, m', p', Y und Z wie vorstehend definiert sind.

Vorteilhafte Anteile, Verhältnisse und Ausgestaltungen der Monomere **m1, m2, ms** und von allfälligen weiteren Monomeren entsprechen den bereits vorstehend genannten Anteilen, Verhältnissen und Ausgestaltungen welche im Zusammenhang mit den der Monomereinheiten **M1, M2** und **MS** beschrieben wurden.

Besonders vorteilhaft ist das wenigstens eine weiter Monomer **ms** ausgewählt aus Vinylacetat, Styrol, N-vinyl-pyrrolidon und/oder Hydroxyalkyl(meth)acrylat, insbesondere Hydroxyethylacrylat.

Bevorzugt erfolgt die Polymerisation in Schritt a) und/oder in Schritt b) in einer wässrigen Lösung. Insbesondere erfolgen die Polymerisationen in beiden Schritten a) und b) in wässrigen Lösungen. Dies gilt entsprechend auch für Schritt c), sofern dieser durchgeführt wird. Wie es sich gezeigt hat, wirkt sich dies positiv auf die Dispergierwirkung des Blockcopolymers aus.

Es ist aber auch möglich andere Lösungsmittel vorzusehen, beispielsweise Ethanol.

Die Polymerisation in Schritt a) und/oder b) erfolgt mit Vorteil durch eine freie radikalische Polymerisation, bevorzugt durch eine lebend radikalische Polymerisation, insbesondere durch Reversible Additions-Fragmentierungs Kettenübertragungs-Polymerisation (RAFT). Dies gilt entsprechend auch für Schritt c), sofern dieser durchgeführt wird.

Eine radikalische Polymerisation kann in drei Schritte aufgeteilt werden: Initiierung, Wachstum und Termination. In der freien radikalischen Polymerisation, wie sie z.B. in der EP 1 110 981 A2 (Kao) beschrieben ist, laufen alle drei Schritte parallel ab. Die Lebensdauer der aktiven, wachsenden Ketten ist jeweils sehr gering und die Monomerkonzentration während des Kettenwachstums einer Kette bleibt im Wesentlichen konstant. Die so gebildeten Polymerketten verfügen über keine aktiven Zentren die für eine Anlagerung weiterer Monomere geeignet sind. Dieser Mechanismus lässt also keine Kontrolle über die Struktur der Polymere zu. Die Darstellung von Blockstrukturen mittels konventioneller freier radikalischer Polymerisation ist daher üblicherweise nicht möglich.

Im Gegensatz dazu zeichnen sich kontrollierte radikalische Polymerisationen oder die lebend radikalische Polymerisation durch reversible oder gar fehlende Abbruch- oder Übertragungsreaktionen aus. Nach der Initiierung bleiben demnach die aktiven Zentren während der ganzen Reaktion erhalten. Alle Polymerketten werden gleichzeitig gebildet (initiiert) und wachsen kontinuierlich über die gesamte Zeit. Die radikalische Funktionalität des aktiven Zentrums bleibt im Idealfall auch noch nach vollständigem Umsatz der zu polymerisierenden Monomere erhalten. Diese besondere Eigenschaft der kontrollierten Polymerisationen ermöglicht es, durch sequenzielle Zugabe von verschiedenen Monomeren wohldefinierte Strukturen wie Blockpolymere herzustellen (siehe z.B."Polymere: Synthese, Synthese und Eigenschaften"; Autoren: Koltzenburg, Maskos, Nuyken; Verlag: Springer Spektrum; ISBN: 97-3-642-34772-6 sowie "Fundamentals of Controlled/living Radical Polymerization"; Verlag: Royal Society of Chemistry; Editoren: Tsarevsky, Sumerlin; ISBN: 978-1-84973-425-7).

Als Initiator für die Polymerisationen wird insbesondere ein Radikalstarter, bevorzugt eine Azoverbindung und/oder ein Peroxid eingesetzt. Geeignete Peroxide sind z.B. ausgewählt aus der Gruppe bestehend aus Dibenzoylperoxid (DBPO), Di-tert-butylperoxid und Diacetylperoxid.

Besonders vorteilhaft als Initiator ist eine Azoverbindung, wie beispielsweise Azobisisobutyronitril (AIBN), α,α'-Azodiisobutyramidin dihydrochlorid (AAPH) und/oder Azo-bis-isobutyramidin (AlBA). Andere Radikalstarter, z.B. Natriumpersulfat oder Di-tert-butylhyponitrit, können unter Umständen aber auch verwendet werden.

Falls die Polymerisation in einer wässrigen Lösung oder in Wasser erfolgt, wird mit Vorteil α,α'-Azodiisobutyramidin dihydrochlorid (AAPH) als Initiator verwendet.

Bevorzugt sind in Schritt a) und/oder in Schritt b) einer oder mehrere Vertreter aus der Gruppe bestehend aus Dithioester, Dithiocarbamate, Trithiocarbonate und Xanthate anwesend. Dies sind sogenannte "RAFT-Agentien", welche es ermöglichen, den Polymerisationsprozess zu kontrollieren. Dies gilt entsprechend auch für Schritt c), sofern dieser durchgeführt wird.

Insbesondere erfolgt die Polymerisation in Schritt a), Schritt b) und/oder Schritt c) bei einer Temperatur in Bereich von 50 - 95°C, insbesondere 70 - 90°C.

Vorteilhafterweise wird unter Inertgasatmosphäre gearbeitet, z.B. unter Stickstoffatmosphäre.

Bei einem besonders bevorzugten Verfahren wird Schritt b) vor Schritt a) ausgeführt.

Gemäss einem vorteilhaften Verfahren wird Schritt b) vor Schritt a) ausgeführt und es finden keine weiteren Polymerisationsschritte mehr statt. Damit ist in einfacher Art und Weise ein Diblockcopolymer erhältlich.

Das erfindungsgemäss verwendete Blockcopolymer ist insbesondere durch das vorstehend beschriebene Verfahren erhältlich oder es wird durch das vorstehend beschriebene Verfahren hergestellt. Unter einer "Bindemittelzusammensetzung" wird vorliegend insbesondere eine Zusammensetzung enthaltend wenigstens ein mineralisches Bindemittel verstanden.

Unter dem Ausdruck "mineralisches Bindemittel" ist insbesondere ein Bindemittel zu verstehen, welches in Anwesenheit von Wasser und gegebenenfalls einem Aktivierungsmittel zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Unter dem Ausdruck "latent hydraulische und/oder puzzolanische Bindemittel" werden im vorliegenden Zusammenhang insbesondere Bindemittel verstanden, welche erst durch Einwirkung von Zusätzen bzw. Aktivierungsmitteln hydraulisch abbinden oder erhärten. Insbesondere sind dies reaktive Zusatzstoffe vom Typ II gemäss Norm EN 1045-2.

Unter einem "alkalischen Aktivierungsmittel" ist vorliegend insbesondere eine basisch oder alkalisch wirkende Substanz gemeint. Darunter wird insbesondere eine Substanz verstanden, welche bei Zugabe zu einer wässrigen Lösung deren pH-Wert anzuheben vermag. Unter einem alkalischen Aktivierungsmittel ist vorliegend im Speziellen eine Substanz zu verstehen, welche geeignet ist zur Aktivierung des Abbindens oder Erhärtens von latent hydraulischen und/oder puzzolanischen Bindemitteln.

Die Bindemittelzusammensetzung ist insbesondere eine alkalisch aktivierte Bindemittelzusammensetzung, welche nebst dem Bindemittel zusätzlich ein alkalisches Aktivierungsmittel enthält. Insbesondere enthält die Bindemittelzusammensetzung ein alkalisches Aktivierungsmittel zur Aktivierung eines latent hydraulischen und/oder puzzolanischen Bindemittels. Die alkalisch aktivierte Bindemittelzusammensetzung verfügt dabei insbesondere über einen höheren pH-Wert als eine analoge Bindemittelzusammensetzung, welche nicht aktiviert ist oder kein alkalisches Aktivierungsmittel enthält. Das alkalische Aktivierungsmittel kann in freier oder gelöster Form vorliegen, z.B. als Salz, und/oder wenigstens teilweise mit dem Bindemittel reagiert haben.

Der pH Wert der alkalisch aktivierten Bindemittelzusammensetzung, welche nebst dem Bindemittel zusätzlich ein alkalisches Aktivierungsmittel enthält, verfügt insbesondere über einen pH-Wert, welcher um wenigstens 0.1, in Besonderen um wenigstens 0.5, im Speziellen wenigstens 1.0, im ganz besonderen um wenigstens 1.5, grösser ist als der pH-Wert der analogen Bindemittelzusammensetzung, welche nicht aktiviert ist oder kein alkalisches Aktivierungsmittel enthält. Das Aktivierungsmittel liegt demnach insbesondere mit einem entsprechenden Anteil vor oder es wird mit einem entsprechenden Anteil zugegeben oder verwendet, um eine derartige pH-Wert-Erhöhung zu erreichen.

Bevorzugt enthält die Bindemittelzusammensetzung ein latent hydraulisches und/oder puzzolanisches Bindemittel oder besteht daraus. Mögliche latent hydraulische und/oder puzzolanische Bindemittel sind insbesondere Schlacken, Puzzolane, Flugaschen, Silicastaub, Vulkanaschen, Metakaoline, Reishülsen (rice husk), gebrannter Schiefer und/oder calcinierter Ton. Bevorzugte latent hydraulische und/oder puzzolanische Bindemittel umfassen Schlacken, Puzzolane, Flugaschen und/oder Silicastaub. Besonders bevorzugt sind vorliegend Schlacke und/oder Flugasche.

Die Bindemittelzusammensetzung ist insbesondere eine zementöse oder zementhaltige Bindemittelzusammensetzung. Ein Anteil des Zements an der Bindemittelzusammensetzung beträgt dabei im Speziellen wenigstens 5 Gew.-%, insbesondere 5 - 95 Gew.-%, bevorzugt 60 - 80 Gew.-%. Als Zement ist z.B. ein Portlandzement geeignet. Es können aber beispielsweise auch Kalziumaluminatzemente, Portlandkalksteinzemente und/oder Belitreiche Sulfoaluminatzemente eingesetzt werden.

In einer vorteilhaften Ausführungsform weist die Bindemittelzusammensetzung 5 - 95 Gew.-%, insbesondere 15 - 50 Gew.-%, besonders bevorzugt 20 - 40 Gew.-% an latent hydraulischem und/oder puzzolanischem Bindemittel, sowie 5 - 95 Gew.-%, bevorzugt 60 - 80 Gew.-%, an hydraulischem Bindemittel auf. Das hydraulische Bindemittel ist dabei mit Vorteil ein Zement, insbesondere ein Portlandzement.

Die Bindemittelzusammensetzung kann zusätzlich oder anstelle der vorstehend genannten Komponenten beispielsweise auch andere hydraulische Bindemittel, z.B. hydraulischen Kalk, beinhalten. Ebenso kann die Bindemittelzusammensetzung auch nichthydraulische Bindemittel enthalten, beispielsweise Gips, Anhydrit und/oder Weisskalk.

Weiter kann die Bindemittelzusammensetzung inerte Stoffe, z.B. Pigmente, Kalkstein und/oder Quarzmehle enthalten. Dies insbesondere in Kombination mit latent hydraulischen und/oder puzzolanischen Bindemitteln. Dadurch kann ein Teil der latent hydraulischen und/oder puzzolanischen Bindemitteln durch inerte Stoffe, z.B. Kalkstein, ersetzt werden.

Das alkalische Aktivierungsmittel umfasst mit Vorteil ein Alkalimetallsalz und/oder Erdalkalimetallsalz. Insbesondere handelt es sich um ein Alkalimetallhydroxid, ein Erdalkalimetallhydroxid, ein Alkalimetalloxid, ein Erdalkalimetalloxid, ein Alkalimetallcarbonat, ein Alkalimetallsulfat und/oder ein Alkalimetallsilikat. Das alkalische Aktivierungsmittel ist insbesondere ausgewählt aus NaOH, Na₂CO₃, Na₂O, Na₂SO₄, Na-Silikat, KOH, K-Silikat, CaO, Ca(OH)₂ oder Mischungen davon.

Beim Na-Silikat handelt es sich insbesondere um ein Natriummetasilikat oder Wasserglas, im Besonderen mit der Formel Na₂SiO₃. Das K-Silikat ist insbesondere ein Kaliummetasilikat oder Wasserglas, im Speziellen mit der Formel K₂SiO₃.

Gemäss einer bevorzugten Ausführungsform umfasst das Aktivierungsmittel ein Alkalimetallhydroxid, ein Alkalimetallsulfat und/oder ein Alkalimetallsilikat oder das Aktiverungsmittel besteht daraus. Im Besonderen handelt es sich dabei um ein Natriumsulfat, Kaliumsulfat, Natriumhydroxid, Kaliumhydroxid, Natriumsilikat und/oder Kaliumsilikat. Speziell bevorzugt sind Natriumsulfat, Natriumhydroxid und/oder Natriumsilikat.

Besonders bevorzugt umfasst das Aktivierungsmittel ein Alkalimetallsalz oder es besteht daraus.

In einer weiteren bevorzugten Ausführungsform handelt es sich beim Aktivierungsmittel um ein Alkalimetallhydroxid, Alkalimetallcarbonat und/oder ein Alkalimetallsulfat. Bevorzugt sind NaOH, KOH, Na₂CO₃ und/oder Na₂SO₄. Besonders bevorzugt ist ein Alkalimetallhydroxyd und/oder ein Alkalimetallcarbonat. Insbesondere ist das Aktivierungsmittel NaOH und/oder Na₂CO₃, bevorzugt NaOH.

Derartige Aktivierungsmittel rufen eine besonders starke Aktivierung der latent hydraulischen und/oder puzzolanischen Bindemittel hervor und sind zugleich mit den erfindungsgemässen Blockcopolymeren **P** kompatibel. Prinzipiell sind aber auch andere Aktivierungsmittel einsetzbar.

Mit Vorteil beträgt der Anteil des alkalischen Aktivierungsmittels 0.001 - 10 Gew.-%, insbesondere 0.1 - 5 Gew.-%, besonders bevorzugt 0.2 - 1.5 Gew.-% oder 0.5 - 1.5 Gew.-%, jeweils bezogen auf das Gewicht des Bindemittels. Die Konzentrationen beziehen sich insbesondere auf das Gesamtgewicht des Bindemittels.

Ein weiterer Aspekt der Erfindung betrifft eine Bindemittelzusammensetzung enthaltend mindestens ein mineralisches Bindemittel, ein alkalisches Aktivierungsmittel sowie ein wie vorstehend definiertes Blockcopolymer **P.** Das alkalische Aktivierungsmittel ist mit Vorteil ein wie vorstehend beschriebenes, alkalisches Aktivierungsmittel. Derartige Bindemittelzusammensetzungen lassen sich beispielsweise zusammen mit Aggregaten wie Sand, Kies und/oder Gesteinskörnungen für die Herstellung von Mörteln und/oder Beton einsetzen.

Das mineralische Bindemittel enthält vorteilhafterweise ein latent hydraulisches und/oder puzzolanisches Bindemittel oder besteht daraus.

Die Bindemittelzusammensetzung ist insbesondere eine verarbeitbare und/oder mit Wasser angemachte mineralische Bindemittelzusammensetzung.

Ein Gewichtsverhältnis von Wasser zu Bindemittel in der Bindemittelzusammensetzung liegt bevorzugt im Bereich von 0.25 - 0.7 Gew.-%, insbesondere 0.26 - 0.65 Gew.-%, bevorzugt 0.27 - 0.60 Gew.-%, im Speziellen 0.28 - 0.55 Gew.-%.

Das Blockcopolymer **P** wird mit Vorteil mit einem Anteil von 0.01 - 10 Gew.-%, insbesondere 0.1 - 7 Gew.-%, im Speziellen 0.2 - 5 Gew.-%, bezogen auf den Bindemittelgehalt, eingesetzt. Der Anteil des Blockcopolymers **P** bezieht sich dabei auf das Blockcopolymer **P** an sich. Bei einem Blockcopolymer **P** in Form einer Lösung ist entsprechend der Feststoffgehalt massgebend.

Ein zusätzlicher Aspekt der vorliegenden Erfindung bezieht sich auf einen Formkörper, insbesondere ein Bestandteil eines Bauwerks, erhältlich durch Aushärten einer wie vorstehend beschriebenen Bindemittelzusammensetzung nach Zugabe von Wasser.

Ein Bauwerk kann z.B. eine Brücke, ein Gebäude, ein Tunnel, eine Fahrbahn, oder eine Start- und Landebahn sein.

Ein weiterer Aspekt der vorliegenden Erfindung betrifft ein Verfahren zur Herstellung einer Bindemittelzusammensetzung. Dabei wird ein mineralisches Bindemittel, welches insbesondere ein latent hydraulisches und/oder puzzolanisches Bindemittel enthält oder daraus besteht, mit einem Blockcopolymer **P,** wie vorstehend beschrieben, und einem alkalischen Aktivierungsmittel vermischt.

Gemäss einem bevorzugten Verfahren wird dabei das Anmachwasser für die Bindemittelzusammensetzung mit dem Aktivierungsmittel vorgemischt und anschliessend das Blockcopolymer **P** beigemischt. In einem nachfolgenden Schritt wird dann das Anmachwasser enthaltend das Blockcopolymer **P** und gegebenenfalls das Aktivierungsmittel mit dem Bindemittel vermischt. Die hat sich im Hinblick auf eine möglichst gute Wirksamkeit des Blockcopolymers **P** in der Bindemittelzusammensetzung als vorteilhaft erwiesen.

Es ist aber auch möglich, zuerst das Aktivierungsmittel mit dem mineralischen Bindemittel zu vermischen, z.B. mit einem Teil des Anmachwassers, und nachträglich das Blockcopolymer **P** beizumischen, beispielsweise mit einem weiteren Teil des Anmachwassers.

Aus den nachfolgenden Ausführungsbeispielen ergeben sich weitere vorteilhafte Ausführungsformen der Erfindung.

### Ausführungsbeispiele

### 1. Herstellungsbeispiele für Polymere

### 1.1 Diblockcopolymer P1

Zur Herstellung des Diblockcopolymers **P1** mittels RAFT-Polymerisation werden in einem Rundkolben, ausgestattet mit einem Rückflusskühler, Rührwerk, Thermometer und einem Inertgaseinleitungsrohr 57.4 g 50 %-iges Methoxy-Polyethylenglykol1000-Methacrylat (0.03 mol) und 24.9 g deionisiertes Wasser vorgelegt. Das Reaktionsgemisch wird unter kräftigem Rühren auf 80°C erwärmt. Ein leichter Inertgas-strom wird während des Aufwärmens und der ganzen restlichen Reaktionsdauer durch die Lösung geführt. Zum Gemisch werden nun 756 mg 4-Cyano-4-(thiobenzoyl)pentanoic acid (2.7 mmol) gegeben. Nachdem sich die Substanz vollständig gelöst hat, werden 135 mg AIBN (0.82 mmol) zugegeben. Von nun an wird der Umsatz mittels HPLC regelmässig bestimmt.

Sobald die Umsetzung, bezogen auf Methoxy-Polyethylenglykol-Methacrylat, über 80% beträgt, werden dem Reaktionsgemisch 5.85 g Acrylsäure (0.08 mol) zugegeben. Das Gemisch wird für weitere 4h reagieren und anschliessend abkühlen gelassen. Zurück bleibt eine klare, leicht rötliche, wässrige Lösung mit einem Feststoffgehalt von rund 40%.

### 1.2 Diblockcopolymer P2

Zur Herstellung des Diblockcopolymers **P2** mittels RAFT-Polymerisation werden in einem Rundkolben, ausgestattet mit einem Rückflusskühler, Rührwerk, Thermometer und einem Inertgaseinleitungsrohr 347.21 g 48 %-iges Methoxy-Polyethylenglykol2000-Methacrylat (0.08 mol) und 112.2 g deionisiertes Wasser vorgelegt. Das Reaktionsgemisch wird unter kräftigem Rühren auf 80°C erwärmt. Ein leichter Inertgas-strom wird während des Aufwärmens und der ganzen restlichen Reaktionsdauer durch die Lösung geführt. Zum Gemisch werden nun 2.27 g 4-Cyano-4-(thiobenzoyl)pentanoic acid (0.008 mol) gegeben. Nachdem sich die Substanz vollständig gelöst hat, werden 404 mg AIBN (0.0024 mol) zugegeben. Von nun an wird der Umsatz mittels HPLC regelmässig bestimmt.

Sobald die Umsetzung, bezogen auf Methoxy-Polyethylenglykol-Methacrylat, über 80% beträgt, werden dem Reaktionsgemisch 23.78 g Acrylsäure (0.33 mol) zugegeben. Das Gemisch wird für weitere 4h reagieren und anschliessend abkühlen gelassen. Zurück bleibt eine klare, leicht rötliche, wässrige Lösung mit einem Feststoffgehalt von rund 40%.

### 1.3 Statistisches Polymer P3

In einem Reaktionsgefäss, ausgestattet mit einem mechanischen Rührwerk, Thermometer und Rückflusskühler wurden 234 g Wasser, 60 g Maleinsäureanhydrid (0.6 mol), 520 g Allyl-Polyethylenglycolether (0.47 mol; mittleres Molekülgewicht 1100 g/mol)

### 2. Mörtelmischungen

### 2.1 Herstellung

Die zu Testzwecken eingesetzte Mörtelmischung weist die in Tabelle 1 beschriebene Trockenzusammensetzung auf:

**Tabelle 1: Trockenzusammensetzung Mörtelmischung**

| **Komponente** | **Menge [g]** |
|---|---|
| Zement (CEM I 42.5 N; Normo 4; erhältlich bei Holcim Schweiz) | 525 g |
| Schlacke (Löruns) | 225 g |
| Kalksteinfüller | 141 g |
| Sand 0-1 mm | 738 g |
| Sand 1-4 mm | 1107 g |
| Sand 4-8 mm | 1154 g |

Zum Anmachen einer Mörtelmischung wurden die Sande, der Kalksteinfüller, der Zement und die Schlacke 1 Minute in einem Hobart-Mischer trocken gemischt. Innerhalb von 30 Sekunden wurde das Anmachwasser (Verhältnis Wasser zu Zement w/z = 0.44) zugegeben und noch weitere 2.5 Minuten gemischt. Die Gesamtmischzeit nass dauerte jeweils 3 Minuten.

Dem Anmachwasser wurde vor der Zugabe zur Mörtelmischung vorgängig das jeweilige Polymer (Anteil: 0.32 Gew.-%; bezogen auf Feststoffgehalt des Polymers und bezogen auf Zementgehalt) sowie gegebenenfalls ein basisches Aktivierungsmittel (NaOH; 1.25 Gew.-% bezogen auf Bindemittelgehalt (Zement plus Schlacke)) beigemischt. Sofern sowohl ein Polymer als auch ein basisches Aktivierungsmittel zugemischt wurden, erfolgte die Zugabe des basischen Aktivierungsmittels zum Anmachwasser vor der Zugabe des Polymers.

### 2.2 Mörteltests

Zur Bestimmung der Dispergierwirkung der Polymere wurde jeweils das Ausbreitmass (ABM) von angemachten Mörtelmischungen zu verschiedenen Zeiten gemessen. Das Ausbreitmass (ABM) des Mörtels wurde gemäss EN 1015-3 bestimmt.

Weiter wurde der Einfluss der Polymere auf das Hydratationsverhalten von mineralischen Bindemittelzusammensetzungen durch Messung der zeitlichen Temperaturentwicklung von Mörtelmischungen nach dem Anmachen mit Wasser ermittelt. Die Temperaturmessung erfolgte unter adiabatischen Bedingungen mit einem Thermoelement als Temperatursensor in an sich bekannter Weise. Sämtliche Proben wurden unter gleichen Bedingungen gemessen. Als Mass für die Erstarrungszeit wird im vorliegenden Fall die vom Anmachen der Mörtelmischung bis zum Erreichen des nach der Induktionsphase bzw. Ruhephase auftretenden Temperaturmaximums verstrichene Zeit [t(TM)] betrachtet.

### 2.3 Resultate der Mörteltests

Tabelle 2 gibt eine Übersicht über die durchgeführten Mörteltests und die dabei erzielten Resultate. Versuch **V1** ist ein zu Vergleichszwecken durchgeführter Nullversuch ohne Zugabe eines Polymers.

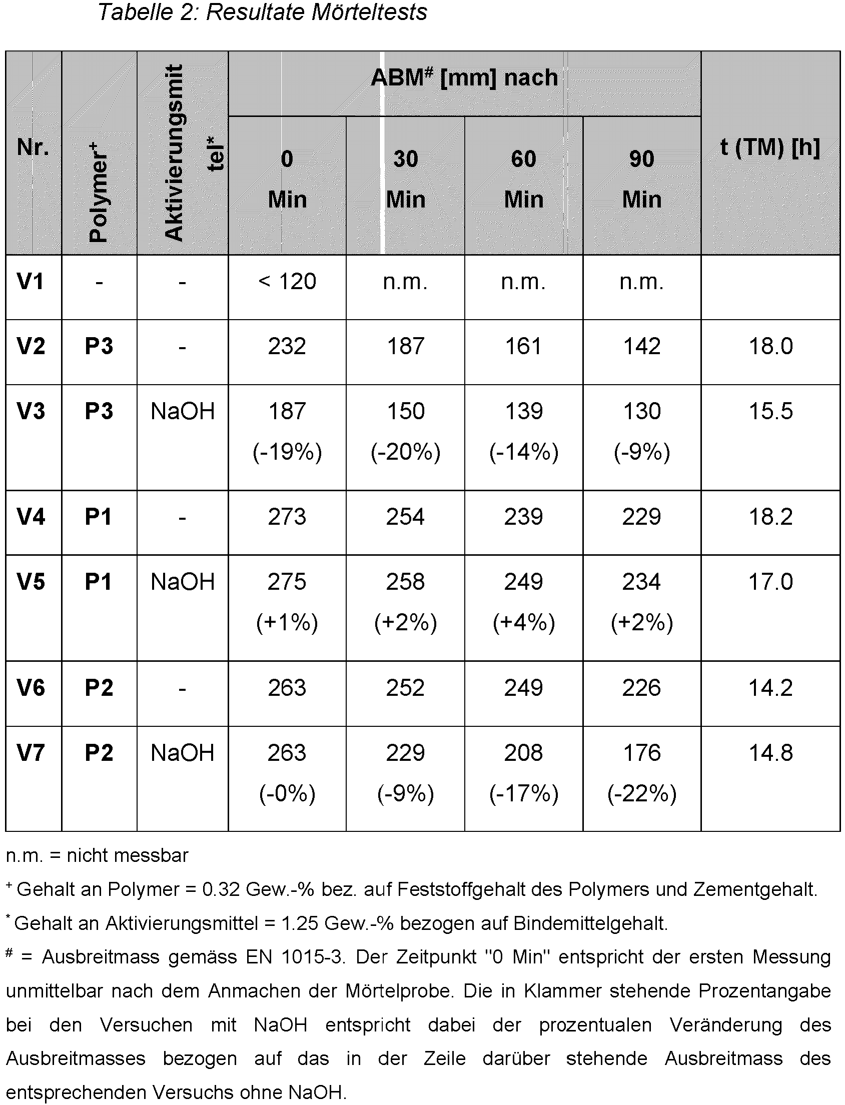

Die Versuche zeigen deutlich, dass bei Verwendung von Blockopolymeren **P1-P2** (siehe Versuche **V4-V7**) die prozentuale Veränderung des Ausbreitmasses aufgrund der Zugabe von NaOH zumindest zu frühen Zeiten klar geringer ausfällt als bei Verwendung des Referenzpolymers **P3** (siehe Versuche **V2** und **V3**)**.** Des Weiteren ist ersichtlich, dass bei gleicher Dosierung die erfindungsgemässen Blockcopolymere absolut gesehen eine klar bessere Verflüssigungsleistung aufweisen, welche zudem auch über längere Zeiten auf relativ hohem Niveau aufrechterhalten bleiben.

Aus den präsentierten Resultaten lässt sich somit schliessen, dass die erfindungsgemässen Blockcopolymere in verschiedener Hinsicht vorteilhaft gegenüber bekannten Polymeren sind. Insbesondere können mit den erfindungsgemässen Polymeren hohe Dispergier- und Verflüssigungswirkungen erreicht werden, welche sich auch über vergleichsweise lange Zeit auf einem für die Praxis interessanten Niveau aufrechterhalten lassen. Zudem sind die erfindungsgemässen Polymere klar weniger anfällig gegenüber alkalischen Aktivierungsmitteln als herkömmliche Polymere.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung eines Blockcopolymers P als Dispergiermittel in einer Bindemittelzusammensetzung enthaltend mindestens ein mineralisches Bindemittel und ein alkalisches Aktivierungsmittel, wobei ein Anteil des alkalischen Aktivierungsmittels bezogen auf das Gewicht des Bindemittels 0.001 - 10 Gew.-% beträgt, und wobei das Blockcopolymer P wenigstens einen ersten Block A und wenigstens einen zweiten Block B umfasst, wobei der erste Block A eine Monomereinheit **M1** der Formel I aufweist, 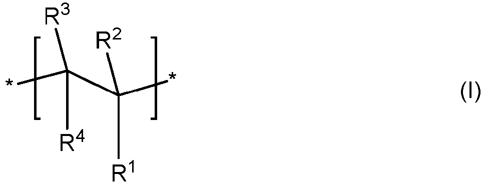 und der zweite Block B eine Monomereinheit **M2** der Formel II beinhaltet 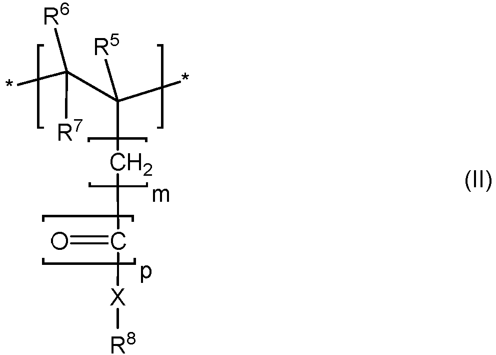 wobei
R¹für -COOM steht,
R², R³, R⁵ und R⁶, jeweils unabhängig voneinander, für H oder eine Alkylgruppe mit 1 Kohlenstoffatom stehen,
R⁴ und R⁷, jeweils unabhängig voneinander, für H, -COOM stehen,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht, wobei bei wenigstens 99 Mol-% aller Monomereinheiten **M2,** X für -O- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cyclohexylgruppe oder -Alkylarylgruppe steht,
und n = 2 - 250, insbesondere 10 - 200 ist;
und wobei ein allenfalls vorhandener Anteil von Monomereinheiten **M2** im ersten Block **A** kleiner als 25 Mol-%, insbesondere kleiner gleich 10 Mol-%, ist, bezogen auf sämtliche Monomereinheiten **M1** im ersten Block **A** und wobei ein allenfalls vorhandener Anteil von Monomereinheiten **M1** im zweiten Block **B** kleiner als 25 Mol-%, insbesondere kleiner gleich 10 Mol-%, ist, bezogen auf sämtliche Monomereinheiten **M2** im zweiten Block **B,** und wobei das Blockcopolymer **P** ein Diblockcopolymer ist, welches aus einem Block **A** und einem Block **B** besteht.

2. Verwendung nach Anspruch 1, **dadurch gekennzeichnet, dass** der wenigstens eine erste Block **A** des Blockcopolymers **P** 5 - 70, insbesondere 7 - 40, bevorzugt 10 - 25 Monomereinheiten **M1** umfasst und/oder dass der wenigstens eine zweite Block **B** des Blockcopolymers **P** 5-70, insbesondere 7 - 40, bevorzugt 10 - 25 Monomereinheiten **M2** umfasst.

3. Verwendung nach wenigstens einem der Ansprüche 1 - 2, **dadurch gekennzeichnet, dass** der erste Block **A** des Blockcopolymers **P** 25 - 35 Monomereinheiten **M1** umfasst und/oder dass der wenigstens eine zweite Block **B** des Blockcopolymers **P** 10 - 20 Monomereinheiten **M2** umfasst.

4. Verwendung nach wenigstens einem der Ansprüche 1 - 3, **dadurch gekennzeichnet, dass** das Blockcopolymer **P** ein Molverhältnis der Monomereinheiten **M1** zu den Monomereinheiten **M2** im Bereich von 0.5 - 6, insbesondere 0.7 - 4, bevorzugt 0.9 - 3.8, weiter bevorzugt 1.0 - 3.7 oder 2.0 - 3.5 aufweist.

5. Verwendung nach wenigstens einem der Ansprüche 1 - 4, **dadurch gekennzeichnet, dass** der erste Block **A** des Blockcopolymers **P** zu wenigstens 20 Mol-%, insbesondere wenigstens 50 Mol-%, im Besonderen wenigstens 75 Mol-%, speziell wenigstens 90 Mol-%, bezogen auf sämtliche Monomereinheiten im ersten Block **A,** aus Monomereinheiten **M1** der Formel I besteht und/oder dass der zweite Block **B** des mindestens einen Blockcopolymers **P** zu wenigstens 20 Mol-%, insbesondere wenigstens 50 Mol-%, im Besonderen wenigstens 75 Mol-%, speziell wenigstens 90 Mol-%, bezogen auf sämtliche Monomereinheiten im zweiten Block **B,** aus Monomereinheiten **M2** der Formel II besteht.

6. Verwendung nach wenigstens einem der Ansprüche 1 - 5, **dadurch gekennzeichnet, dass** das Blockcopolymer **P** wenigstens eine weitere Monomereinheit **MS** umfasst, welche insbesondere eine Monomereinheit der Formel III ist: 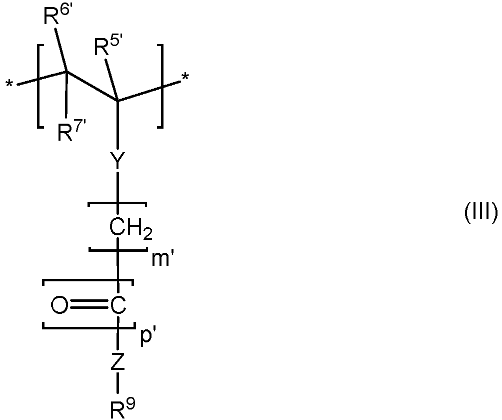 wobei
R^{5'}, R^{6'}, R^{7'}, m' und p' wie R⁵, R⁶, R⁷, m und p in Anspruch 1 definiert sind; Y, jeweils unabhängig voneinander, für eine chemische Bindung oder -O-steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

7. Verwendung nach wenigstens einem der Ansprüche 1 - 6, **dadurch gekennzeichnet, dass** das beim Blockcopolymer **P** n = 10 - 150, insbesondere n = 15 - 100, bevorzugt n = 17 - 70, im Speziellen n = 19 - 45, ist.

8. Verwendung nach wenigstens einem der Ansprüche 1 - 7, **dadurch gekennzeichnet, dass** das mineralische Bindemittel ein latent hydraulisches und/oder puzzolanisches Bindemittel enthält oder daraus besteht.

9. Verwendung nach Anspruch 8, **dadurch gekennzeichnet, dass** die Bindemittelzusammensetzung 5 - 95 Gew.-%, insbesondere 15 - 50 Gew.-%, besonders bevorzugt 20 - 40 Gew.-% an latent hydraulischem und/oder puzzolanischem Bindemittel, sowie 5 - 95 Gew.-%, bevorzugt 60 - 80 Gew.-%, an hydraulischem Bindemittel, insbesondere Zement, aufweist.

10. Verwendung nach wenigstens einem der Ansprüche 1 - 9, **dadurch gekennzeichnet, dass** das Aktivierungsmittel ein Alkalimetallhydroxyd, Alkalimetallcarbonat und/oder Alkalimetallsulfat umfasst, insbesondere NaOH, KOH, Na₂CO₃ und/oder Na₂SO₄.

11. Bindemittelzusammensetzung enthaltend mindestens ein mineralisches Bindemittel, ein alkalisches Aktivierungsmittel, wobei ein Anteil des alkalischen Aktivierungsmittels bezogen auf das Gewicht des Bindemittels 0.001 - 10 Gew.-% beträgt, sowie ein, wie in einem der vorangehenden Ansprüchen definiertes, Blockcopolymer **P.**

12. Verfahren zur Herstellung einer Bindemittelzusammensetzung nach Anspruch 11, wobei ein mineralisches Bindemittel mit einem Blockcopolymer **P** wie in den vorangehenden Ansprüchen definiert, und einem alkalischen Aktivierungsmittel vermischt wird.

13. Formkörper, insbesondere ein Bestandteil eines Bauwerks, erhältlich durch Aushärten einer Bindemittelzusammensetzung gemäss Anspruch 12 nach Zugabe von Wasser.

## Claims

1. Use of a block copolymer P as dispersant in a binder composition comprising at least one mineral binder and an alkaline activating agent, wherein a fraction of the alkaline activating agent based on the weight of the binder is 0.001 - 10 wt%, and wherein the block copolymer P comprises at least one first block A and at least one second block B, the first block A comprising a monomer unit M1 of the formula I, 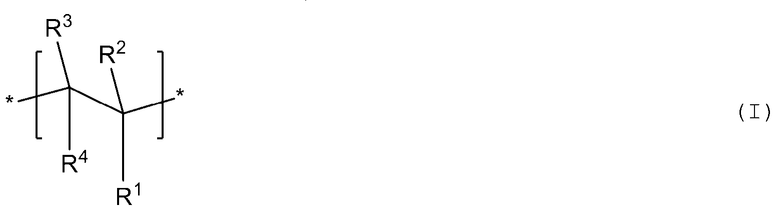 and the second block B containing a monomer unit M2 of the formula II 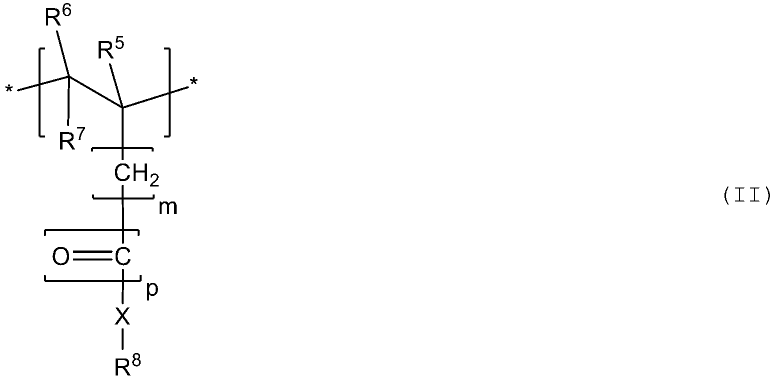 where
R¹ is -COOM,
R², R³, R⁵ and R⁶, in each case independently of one another, are H or an alkyl group having 1 carbon atom,
R⁴ and R⁷, in each case independently of one another, are H or -COOM,
M, independently of any other, is H⁺, an alkali metal ion, an alkaline earth metal ion, a di- or trivalent metal ion, an ammonium ion or an organic ammonium group; m is 0, 1 or 2,
p is 0 or 1,
X, in each case independently of any other, is -O- or - NH-, where for at least 99 mol% of all monomer units M2, X is -O-,
R⁸ is a group of the formula -[AO]ₙ-R^{a},
where A is C₂- to C₄-alkylene, R^{a} is H, a C₁- to C₂₀-alkyl group, -cyclohexyl group or -alkylaryl group,
and n is 2 - 250, more particularly 10 - 200;
and where any fraction of monomer units M2 present in the first block A is less than 25 mol%, more particularly less than or equal to 10 mol%, based on all the monomer units M1 in the first block A, and where any fraction of monomer units M1 present in the second block B is less than 25 mol%, more particularly less than or equal to 10 mol%, based on all the monomer units M2 in the second block B, and wherein the block copolymer P is a diblock copolymer consisting of a block A and a block B.

2. Use according to Claim 1, **characterized in that** the at least one first block A of the block copolymer P comprises 5 - 70, more particularly 7 - 40, preferably 10 - 25 monomer units M1 and/or **in that** the at least one second block B of the block copolymer P comprises 5 - 70, more particularly 7 - 40, preferably 10 - 25 monomer units M2.

3. Use according to at least one of Claims 1 - 2, **characterized in that** the first block A of the block copolymer P comprises 25 - 35 monomer units M1 and/or **in that** the at least one second block B of the block copolymer P comprises 10 - 20 monomer units M2.

4. Use according to at least one of Claims 1 - 3, **characterized in that** the block copolymer P has a molar ratio of the monomer units M1 to the monomer units M2 in the range of 0.5 - 6, more particularly 0.7 - 4, preferably 0.9 - 3.8, more preferably 1.0 - 3.7 or 2.0 - 3.5.

5. Use according to at least one of Claims 1 - 4, **characterized in that** the first block A of the block copolymer P consists to an extent of at least 20 mol%, more particularly at least 50 mol%, in particular at least 75 mol%, especially at least 90 mol%, based on all the monomer units in the first block A, of monomer units M1 of the formula I, and/or **in that** the second block B of the at least one block copolymer P consists to an extent of at least 20 mol%, more particularly at least 50 mol%, in particular at least 75 mol%, especially at least 90 mol%, based on all the monomer units in the second block B, of monomer units M2 of the formula II.

6. Use according to at least one of Claims 1 - 5, **characterized in that** the block copolymer P comprises at least one further monomer unit MS which in particular is a monomer unit of the formula III: 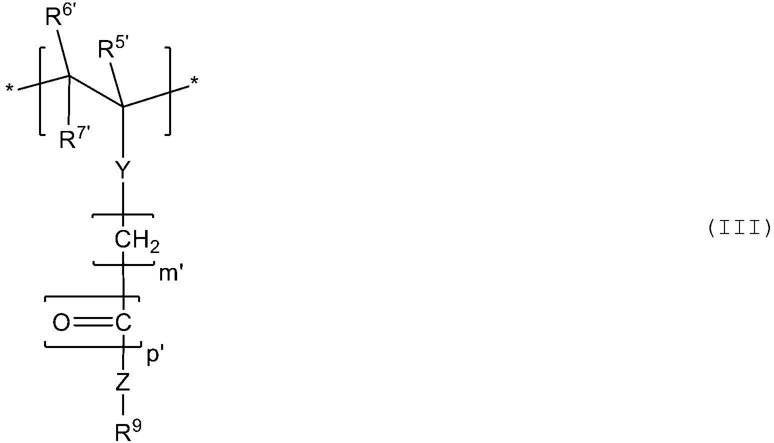 where
R^{5'}, R^{6'}, R^{7'}, m' and p' are defined like R⁵, R⁶, R⁷, m and p in Claim 1;
Y, in each case independently of any other, is a chemical bond or -O-;
Z, in each case independently of any other, is a chemical bond, -O- or -NH-;
R⁹, in each case independently of any other, is an alkyl group, cycloalkyl group, alkylaryl group, aryl group, hydroxyalkyl group or an acetoxyalkyl group, in each case having 1 - 20 carbon atoms.

7. Use according to at least one of Claims 1 - 6, **characterized in that** in the block copolymer P, n is 10 - 150, more particularly 15 - 100, preferably 17 - 70, especially 19 - 45.

8. Use according to at least one of Claims 1 - 7, **characterized in that** the mineral binder comprises or consists of a latent hydraulic and/or pozzolanic binder.

9. Use according to Claim 8, **characterized in that** the binder composition has 5 - 95 wt%, more particularly 15 - 50 wt%, more preferably 20 - 40 wt% of latent hydraulic and/or pozzolanic binder, and also 5 - 95 wt%, preferably 60 - 80 wt%, of hydraulic binder, more particularly cement.

10. Use according to at least one of Claims 1 - 9, **characterized in that** the activating agent comprises an alkali metal hydroxide, alkali metal carbonate and/or alkali metal sulfate, more particularly NaOH, KOH, Na₂CO₃ and/or Na₂SO₄.

11. Binder composition comprising at least one mineral binder, an alkaline activating agent, wherein a fraction of the alkaline activating agent based on the weight of the binder is 0.001 - 10 wt%, and a block copolymer P as defined in any of the preceding claims.

12. Method for producing a binder composition according to Claim 11, by mixing a mineral binder with a block copolymer P as defined in the preceding claims and with an alkaline activating agent.

13. Shaped article, more particularly a constituent of a construction, obtainable by fully curing a binder composition according to Claim 12 following addition of water.

## Revendications

1. Utilisation d'un copolymère séquencé P en tant qu'agent dispersant dans une composition de liant contenant au moins un liant minéral et un agent d'activation alcalin, une proportion de l'agent d'activation alcalin par rapport au poids du liant étant de 0,001 à 10 % en poids, et le copolymère séquencé P comprenant au moins une première séquence A et au moins une deuxième séquence B, la première séquence A présentant une unité monomère M1 de formule I, 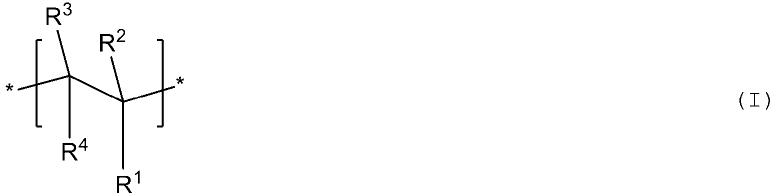 et la deuxième séquence B contenant une unité monomère M2 de formule II 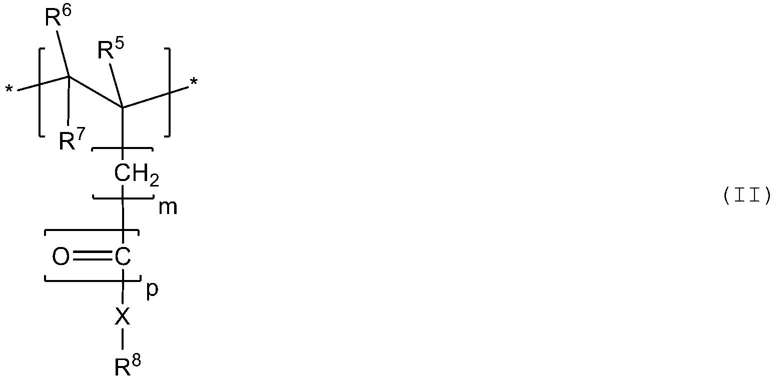 dans lesquelles
R¹ représente -COOM,
R², R³, R⁵ et R⁶, dans chaque cas indépendamment les uns des autres, représentent H ou un groupe alkyle de 1 atome de carbone,
R⁴ et R⁷, dans chaque cas indépendamment l'un de l'autre, représentent H, -COOM,
M représente, indépendamment des autres, H⁺, un ion de métal alcalin, un ion de métal alcalino-terreux, un ion de métal divalent ou trivalent, un ion ammonium ou un groupe ammonium organique ;
m = 0, 1 ou 2,
p = 0 ou 1,
X, dans chaque cas indépendamment des autres, représente -O- ou -NH-, X représentant -O- pour au moins 99 % en moles de toutes les unités monomères M2,
R⁸ représente un groupe de formule [AO]ₙ-R^{a},
dans laquelle A = alkylène en C₂ à C₄, Ra représente H, un groupe alkyle en C₁ à C₂₀, un groupe cyclohexyle ou un groupe alkylaryle,
et n = 2 - 250, notamment 10 - 200 ;
et une proportion éventuellement présente d'unités monomères M2 dans la première séquence A étant inférieure à 25 % en moles, notamment inférieure ou égale à 10 % en moles, par rapport à toutes les unités monomères M1 dans la première séquence A et une proportion éventuellement présente d'unités monomères M1 dans la deuxième séquence B étant inférieure à 25 % en moles, notamment inférieure ou égale à 10 % en moles, par rapport à toutes les unités monomères M2 dans la deuxième séquence B, et le copolymère séquencé P étant un copolymère diséquencé qui est constitué d'une séquence A et d'une séquence B.

2. Utilisation selon la revendication 1, **caractérisée en ce que** l'au moins une première séquence A du copolymère séquencé P comprend 5 à 70, notamment 7 à 40, de préférence 10 à 25 unités monomères M1 et/ou **en ce que** l'au moins une deuxième séquence B du copolymère séquencé P comprend 5 à 70, notamment 7 à 40, de préférence 10 à 25 unités monomères M2.

3. Utilisation selon au moins l'une quelconque des revendications 1 à 2, **caractérisée en ce que** la première séquence A du copolymère séquencé P comprend 25 à 35 unités monomères M1 et/ou **en ce que** l'au moins une deuxième séquence B du copolymère séquencé P comprend 10 à 20 unités monomères M2.

4. Utilisation selon au moins l'une quelconque des revendications 1 à 3, **caractérisée en ce que** le copolymère séquencé P présente un rapport molaire des unités monomères M1 aux unités monomères M2 dans la plage de 0,5 à 6, notamment de 0,7 à 4, de préférence de 0,9 à 3,8, de manière davantage préférée de 1,0 à 3,7 ou de 2,0 à 3,5.

5. Utilisation selon au moins l'une quelconque des revendications 1 à 4, **caractérisée en ce que** la première séquence A du copolymère séquencé P est constituée d'au moins 20 % en moles, notamment d'au moins 50 % en moles, particulièrement d'au moins 75 % en moles, spécialement d'au moins 90 % en moles, par rapport à toutes les unités monomères dans la première séquence A, d'unités monomères M1 de formule I et/ou **en ce que** la deuxième séquence B de l'au moins un copolymère séquencé P est constituée d'au moins 20 % en moles, notamment d'au moins 50 % en moles, particulièrement d'au moins 75 % en moles, spécialement d'au moins 90 % en moles, par rapport à toutes les unités monomères dans la deuxième séquence B, d'unités monomères M2 de formule II.

6. Utilisation selon au moins l'une quelconque des revendications 1 à 5, **caractérisée en ce que** le copolymère séquencé P comprend au moins une autre unité monomère MS, qui est notamment une unité monomère de formule III : 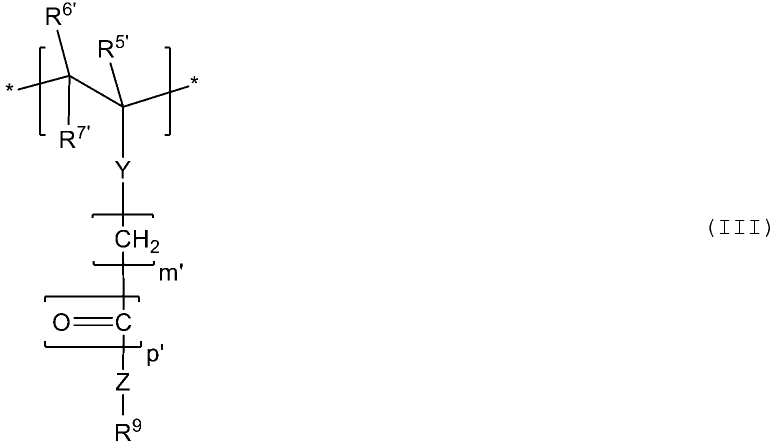 dans laquelle
R^{5'}, R^{6'}, R^{7'}, m' et p' sont définis comme R⁵, R⁶, R⁷, m et p dans la revendication 1; Y, dans chaque cas indépendamment des autres, représente une liaison chimique ou -O- ;
Z, dans chaque cas indépendamment des autres, représente une liaison chimique, -O- ou -NH- ;
R⁹ représente, dans chaque cas indépendamment des autres, un groupe alkyle, un groupe cycloalkyle, un groupe alkylaryle, un groupe aryle, un groupe hydroxyalkyle ou un groupe acétoxyalkyle, chacun de 1 à 20 atomes de carbone.

7. Utilisation selon au moins l'une quelconque des revendications 1 à 6, **caractérisée en ce que**, dans le copolymère séquencé P, n = 10 à 150, notamment n = 15 à 100, de préférence n = 17 à 70, spécialement n = 19 à 45.

8. Utilisation selon au moins l'une quelconque des revendications 1 à 7, **caractérisée en ce que** le liant minéral contient ou est constitué d'un liant hydraulique latent et/ou pouzzolanique.

9. Utilisation selon la revendication 8, **caractérisée en ce que** la composition de liant présente 5 à 95 % en poids, notamment 15 à 50 % en poids, de manière particulièrement préférée 20 à 40 % en poids de liant hydraulique latent et/ou pouzzolanique, ainsi que 5 à 95 % en poids, de préférence 60 à 80 % en poids de liant hydraulique, notamment de ciment.

10. Utilisation selon au moins l'une quelconque des revendications 1 à 9, **caractérisée en ce que** l'agent d'activation comprend un hydroxyde de métal alcalin, un carbonate de métal alcalin et/ou un sulfate de métal alcalin, notamment NaOH, KOH, Na₂CO₃ et/ou Na₂SO₄-

11. Composition de liant comprenant au moins un liant minéral, un agent d'activation alcalin, une proportion de l'agent d'activation alcalin par rapport au poids du liant étant de 0,001 à 10 % en poids, et un copolymère séquencé P tel que défini dans l'une quelconque des revendications précédentes.

12. Procédé de préparation d'une composition de liant selon la revendication 11, un liant minéral étant mélangé avec un copolymère séquencé P tel que défini dans les revendications précédentes, et un agent d'activation alcalin.

13. Corps moulé, notamment constituant d'un ouvrage de construction, pouvant être obtenu par durcissement d'une composition de liant selon la revendication 12 après addition d'eau.
